# FASCICULE DE BREVET EUROPEEN

(11) **EP 3 854 569 B1**
(45) Date de publication et mention de la délivrance du brevet: **26.07.2023**
(21) Numéro de dépôt: 21153273.4
(22) Date de dépôt: 25.01.2021
(51) Int. Cl.: B29C 55/16, B29C 55/14, B29C 55/20

(54) **DISPOSITIF D ÉTIRAGE POUR ÉTIRER UN FILM EN MATIÈRE SYNTHÉTIQUE**
ZIEHVORRICHTUNG ZUM ZIEHEN EINER FOLIE AUS SYNTHETISCHEM MATERIAL
STRETCHING DEVICE FOR STRETCHING A FILM OF SYNTHETIC MATERIAL

(30) Priorité: 27.01.2020 FR 2000764
(43) Date de publication de la demande: 28.07.2021
(73) Titulaire: Marchante, Carolina, 73160 Saint Cassin (FR)
(72) Inventeur: Marchante, Carolina, 73160 Saint Cassin (FR)
(74) Mandataire: Germain Maureau

(56) Documents cités:
- JP-A- 2013 031 938
- US-A- 3 276 071
- US-A- 3 748 704
- US-A- 4 807 336

## Description

La présente invention concerne un dispositif d'étirage pour étirer un film en matière synthétique.

Lors de la fabrication d'un film en matière synthétique, tel qu'un film en polypropylène, en polyester ou composé de toute autre matière thermoplastique, le film, après sa formation, passe successivement par une étape d'étirage longitudinal et une étape d'étirage transversal.

Un système d'étirage, configuré pour étirer un film en matière synthétique dans le sens transversal, comporte de façon connue un four permettant de réguler la température du film pendant son étirage dans le sens transversal, et deux dispositifs d'étirage disposés de part et d'autre du film. Chaque dispositif d'étirage comporte plus particulièrement :
- un rail de guidage s'étendant au moins en partie dans le four et comportant une première surface de guidage tournée vers le film et une deuxième surface de guidage opposée à la première surface de guidage,
- une pluralité de pinces destinées chacune à saisir un même bord longitudinal du film, les pinces étant configurées pour être guidées en translation par le rail de guidage respectif,
- un rail de retenue s'étendant le long du rail de guidage respectif, le rail de retenue comportant une surface d'appui tournée vers le rail de guidage respectif et une surface de retenue opposée à la surface d'appui,
- une pluralité d'éléments de retenue configurés pour être guidés en translation par le rail de retenue, et
- une chaîne sans fin comportant une succession de maillons montés articulés les uns par rapport aux autres et des premiers et deuxièmes éléments d'articulation reliant de manière articulée les maillons, chaque pince étant montée articulée sur un premier élément d'articulation respectif et chaque élément de retenue étant monté articulé sur un deuxième élément d'articulation respectif, la chaîne sans fin étant configurée pour entraîner les pinces respectives le long du rail de guidage respectif, et pour entraîner les éléments de retenue respectifs le long du rail de retenue respectif, la chaîne sans fin étant en outre déformable entre un premier état dans lequel les pinces sont disposées à proximité les unes des autres, et un deuxième état dans lequel les pinces sont éloignées les unes des autres.

Un tel système d'étirage, par exemple connu de US4807336, est adapté à des vitesses de production élevées, y compris lorsque ce système d'étirage est configuré pour assurer simultanément un étirage du film dans le sens transversal et un étirage du film dans le sens longitudinal.

Cependant, afin d'obtenir un taux étirage longitudinal élevé avec un tel système d'étirage, il est nécessaire d'équiper les chaînes sans fin du système d'étirage avec des maillons de longueurs importantes. Or, une telle configuration du système d'étirage induit une distance très élevée entre deux zones de préhension adjacentes du film lorsque chaque chaîne sans fin est dans le deuxième état et que les pinces sont éloignées les unes des autres. Par exemple, avec des pinces ayant chacune une largeur de 50 mm et un étirage longitudinal d'un rapport de 8, la distance entre deux zones de préhension adjacentes du film sera de 400 mm. Une telle distance entre pinces a pour conséquence que l'épaisseur du film n'est pas homogène au niveau des bords longitudinaux de ce dernier, ce qui requiert une découpe ultérieure du film au niveau de ses bords longitudinaux, et donc génère d'importantes pertes de produits.

En outre, l'utilisation de maillons de longueurs élevées requiert des efforts importants pour déplacer chaque chaîne sans fin du premier état au deuxième état, ce qui nécessite de surdimensionner les dispositifs d'entraînement (tels que les poulies de renvoi ou les motorisations) des chaînes sans fin, et donc augmente l'encombrement du système d'étirage et les coûts de fabrication de ce dernier.

De plus, les efforts importants appliqués sur chaque chaîne sans fin pour assurer leur passage du premier état au deuxième état induisent un claquement de chaque pince contre le rail de guidage respectif lors de l'écartement soudain des maillons associés à ladite pince, ce qui génère un bruit important lors du fonctionnement du système d'étirage précité.

La présente invention vise à remédier à tout ou partie de ces inconvénients.

Le problème technique à la base de l'invention consiste en particulier à fournir un dispositif d'étirage qui ne nécessite pas une découpe du film produit au niveau de ses bords longitudinaux après l'étape d'étirage, tout en limitant le bruit généré par le dispositif d'étirage lors de son fonctionnement et l'encombrement du dispositif d'étirage.

A cet effet, la présente invention concerne un dispositif d'étirage pour étirer un film en matière synthétique, comprenant :
- un rail de guidage comportant une première surface de guidage destinée à être tournée vers le film et une deuxième surface de guidage opposée à la première surface de guidage,
- une pluralité de premières pinces et une pluralité de deuxièmes pinces destinées chacune à saisir un même bord longitudinal du film, les premières et deuxièmes pinces étant disposées alternativement le long du rail de guidage et étant configurées pour être guidées par le rail de guidage, et
- une première chaîne sans fin reliée aux premières pinces et configurée pour entraîner les premières pinces le long du rail de guidage,
caractérisé en ce que le dispositif d'étirage comprend en outre une deuxième chaîne sans fin reliée aux deuxièmes pinces et configurée pour entraîner les deuxièmes pinces le long du rail de guidage, les première et deuxième chaînes sans fin étant distinctes l'une de l'autre de telle sorte que les premières pinces ne sont pas reliées mécaniquement à la deuxième chaîne sans fin et de telle sorte que les deuxièmes pinces ne sont pas reliées mécaniquement à la première chaîne sans fin, et en ce que les première et deuxième chaînes sans fin sont déformables entre un premier état dans lequel les premières et deuxièmes pinces sont disposées à proximité les unes des autres, et un deuxième état dans lequel les premières et deuxièmes pinces sont éloignées les unes des autres.

Une telle configuration du dispositif d'étirage, et plus particulièrement des première et deuxième chaînes sans fin, permet de limiter sensiblement la distance entre deux zones de préhension adjacentes du film lorsque les première et deuxième chaînes sans fin sont dans le deuxième état et que les premières et deuxièmes pinces sont éloignées les unes des autres, et donc d'assurer une épaisseur homogène du film au niveau de ses bords longitudinaux. Ainsi, le dispositif d'étirage selon la présente invention ne requiert pas une découpe ultérieure du film au niveau de ses bords longitudinaux.

En outre, le fait que les premières et deuxièmes pinces sont disposées alternativement le long du rail de guidage et configurées pour être entraînées le long du rail de guidage respectivement par les première et deuxième chaînes sans fin permet de maintenir un écart entre chaque paire de premières pinces adjacentes et un écart entre chaque paire de deuxièmes pinces adjacentes lorsque les première et deuxième chaînes sans fin sont dans le premier état, et donc d'assurer un angle d'ouverture prédéterminé pour chaque paire de maillons adjacents des première et deuxième chaînes sans fin lorsque les première et deuxième chaînes sans fin sont dans le premier état.

Ces dispositions permettent de limiter grandement les efforts devant être appliqués sur les première et deuxième chaînes sans fin pour les déformer du premier état vers le deuxième état, ce qui diminue sensiblement les coûts de fabrication d'un système d'étirage équipé du dispositif d'étirage selon la présente invention et également le bruit généré lors du fonctionnement du dispositif d'étirage selon la présente invention.

Le dispositif d'étirage peut en outre présenter une ou plusieurs des caractéristiques suivantes, prises seules ou en combinaison.

Selon un mode de réalisation de l'invention, la première chaîne sans fin et la deuxième chaîne sans fin sont imbriquées l'une dans l'autre.

Selon un mode de réalisation de l'invention, la première chaîne sans fin comporte des premiers maillons primaires et des deuxièmes maillons primaires disposés de manière alternée le long de la première chaîne sans fin et montés articulés les uns par rapport aux autres, et des premiers éléments d'articulation et des deuxièmes éléments d'articulation disposés de manière alternée le long de la première chaîne sans fin et autour desquels sont montés articulés les premiers et deuxièmes maillons primaires, chaque première pince étant montée sur un premier élément d'articulation respectif, et dans lequel la deuxième chaîne sans fin comporte des premiers maillons secondaires et des deuxièmes maillons secondaires disposés de manière alternée le long de la deuxième chaîne sans fin et montés articulés les uns par rapport aux autres, et des premiers organes d'articulation et des deuxièmes organes d'articulation disposés de manière alternée le long de la deuxième chaîne sans fin et autour desquels sont montés articulés les premiers et deuxièmes maillons secondaires, chaque deuxième pince étant montée sur un premier organe d'articulation respectif.

Selon un mode de réalisation de l'invention, les premiers et deuxièmes maillons primaires de la première chaîne sans fin et les premiers et deuxièmes maillons secondaires de la deuxième chaîne sans fin sont imbriqués les uns dans les autres.

Selon un mode de réalisation de l'invention, les premiers et des deuxièmes maillons primaires de la première chaîne sans fin ne sont pas couplés mécaniquement, c'est-à-dire reliés mécaniquement, aux premiers et des deuxièmes maillons secondaires de la deuxième chaîne sans fin.

Selon un mode de réalisation de l'invention, les premiers et deuxièmes éléments d'articulation s'étendent sensiblement verticalement, et les premiers et deuxièmes organes d'articulation s'étendent sensiblement verticalement.

Selon un mode de réalisation de l'invention, chaque première pince comporte un premier galet de roulement configuré pour rouler sur une surface supérieure du rail de guidage, et chaque deuxième pince comporte un deuxième galet de roulement configuré pour rouler sur la surface supérieure du rail de guidage. Avantageusement, le premier galet de roulement primaire de chaque première pince a un axe de rotation sensiblement horizontal, et le deuxième galet de roulement de chaque deuxième pince a un axe de rotation sensiblement horizontal.

Selon un mode de réalisation de l'invention, les premières pinces sont sensiblement identiques aux deuxièmes pinces.

Selon un autre mode de réalisation de l'invention, les premières pinces sont différentes des deuxièmes pinces.

Selon un mode de réalisation de l'invention, les premiers organes d'articulation sont sensiblement identiques aux premiers éléments d'articulation, et les deuxièmes organes d'articulation sont sensiblement identiques aux deuxièmes éléments d'articulation.

Selon un mode de réalisation de l'invention, les premiers organes d'articulation sont différents des premiers éléments d'articulation, et les deuxièmes organes d'articulation sont différents des deuxièmes éléments d'articulation.

Selon un mode de réalisation de l'invention, chaque première pince comporte un galet de guidage primaire configuré pour coopérer avec la première surface de guidage du rail de guidage, et chaque deuxième pince comporte un galet de guidage secondaire configuré pour coopérer avec la première surface de guidage du rail de guidage.

Selon un mode de réalisation de l'invention, chaque galet de guidage primaire a un axe de rotation sensiblement vertical, et chaque galet de guidage secondaire a un axe de rotation sensiblement vertical.

Selon un mode de réalisation de l'invention, les galets de guidage primaires des premières pinces et les galets de guidage secondaires des deuxièmes pinces s'étendent sensiblement dans un même plan d'extension.

Selon un mode de réalisation de l'invention, chaque première pince est située en regard d'un deuxième organe d'articulation respectif, et chaque deuxième pince est située en regard d'un deuxième élément d'articulation respectif.

Selon un mode de réalisation de l'invention, chaque premier élément d'articulation porte au moins un premier galet d'appui configuré pour coopérer avec la deuxième surface de guidage du rail de guidage, et chaque premier organe d'articulation porte au moins un deuxième galet d'appui configuré pour coopérer avec la deuxième surface de guidage du rail de guidage.

Selon un mode de réalisation de l'invention, l'au moins un premier galet d'appui a un axe de rotation sensiblement vertical, et l'au moins un deuxième galet d'appui a un axe de rotation sensiblement vertical.

Selon un mode de réalisation de l'invention, chaque premier élément d'articulation porte un premier galet d'appui supérieur et un premier galet d'appui inférieur qui sont décalés verticalement et qui sont configurés pour coopérer avec la deuxième surface de guidage du rail de guidage, et chaque premier organe d'articulation porte un deuxième galet d'appui supérieur et un deuxième galet d'appui inférieur qui sont décalés verticalement et qui sont configurés pour coopérer avec la deuxième surface de guidage du rail de guidage.

Selon un mode de réalisation de l'invention, les galets de guidage primaires, les galets de guidage secondaires, les premiers galets d'appui supérieurs et les deuxièmes galets d'appui supérieurs s'étendent sensiblement dans un même plan d'extension.

Selon un mode de réalisation de l'invention, le dispositif d'étirage selon comporte en outre :
- un rail de retenue s'étendant le long du rail de guidage, le rail de retenue comportant une surface d'appui tournée vers le rail de guidage et une surface de retenue opposée à la surface d'appui, et
- une pluralité de premiers éléments de retenue et une pluralité de deuxièmes éléments de retenue disposés alternativement le long du rail de retenue et configurés pour être guidés par le rail de retenue, chaque premier élément de retenue étant monté sur un deuxième élément d'articulation respectif de la première chaîne sans fin et étant configuré pour être entraîné par la première chaîne sans fin le long du rail de retenue, chaque deuxième élément de retenue étant monté sur un deuxième organe d'articulation respectif de la deuxième chaîne sans fin et étant configuré pour être entraîné par la deuxième chaîne sans fin le long du rail de retenue.

Selon un mode de réalisation de l'invention, les premiers éléments de retenue sont sensiblement identiques aux deuxièmes éléments de retenue.

Selon un mode de réalisation de l'invention, chaque première pince est configurée pour venir en butée contre un deuxième élément de retenue respectif lorsque les première et deuxième chaînes sans fin sont dans le deuxième état, et chaque deuxième pince est configurée pour venir en butée contre un premier élément de retenue respectif lorsque les première et deuxième chaînes sans fin sont dans le deuxième état. Ces dispositions permettent de stabiliser les premières et deuxièmes pinces lorsque les première et deuxième chaînes sans fin sont le deuxième état, et notamment après la libération du film par les premières et deuxièmes pinces (par exemple lorsqu'elles atteignent une poulie de renvoi).

Selon un mode de réalisation de l'invention, chaque première pince comporte une première surface de butée plane configurée pour venir en butée contre une deuxième surface de butée plane prévue sur le deuxième élément de retenue respectif lorsque les première et deuxième chaînes sans fin sont dans le deuxième état, et chaque deuxième pince comporte une surface de butée primaire plane configurée pour venir en butée contre une surface de butée secondaire plane prévue sur le premier élément de retenue respectif lorsque les première et deuxième chaînes sans fin sont dans le deuxième état.

Selon un mode de réalisation de l'invention, chaque premier élément de retenue comporte un galet de retenue primaire configuré pour coopérer avec la surface de retenue du rail de retenue, et chaque deuxième élément de retenue comporte un galet de retenue secondaire configuré pour coopérer avec la surface de retenue du rail de retenue.

Selon un mode de réalisation de l'invention, le galet de retenue primaire de chaque premier élément de retenue a un axe de rotation sensiblement vertical, et le galet de retenue secondaire de chaque deuxième élément de retenue a un axe de rotation sensiblement vertical.

Selon un mode de réalisation de l'invention, chaque galet de retenue primaire est agencé pour être retenu par le rail de guidage de manière à appliquer une force de retenue sur le deuxième élément d'articulation respectif, et chaque galet de retenue secondaire est agencé pour être retenu par le rail de guidage de manière à appliquer une force de retenue sur le deuxième organe d'articulation respectif.

Selon un mode de réalisation de l'invention, chaque deuxième élément d'articulation porte au moins un galet d'appui primaire configuré pour coopérer avec la surface d'appui du rail de retenue, chaque deuxième organe d'articulation porte au moins un galet d'appui secondaire configuré pour coopérer avec la surface d'appui du rail de retenue.

Selon un mode de réalisation de l'invention, l'au moins un galet d'appui primaire a un axe de rotation sensiblement vertical, et l'au moins un galet d'appui secondaire a un axe de rotation sensiblement vertical.

Selon un mode de réalisation de l'invention, chaque deuxième élément d'articulation porte un galet d'appui primaire supérieur et un galet d'appui primaire inférieur qui sont décalés verticalement et qui sont configurés pour coopérer avec la surface d'appui du rail de retenue, et chaque deuxième organe d'articulation porte un galet d'appui secondaire supérieur et un galet d'appui secondaire inférieur qui sont décalés verticalement et qui sont configurés pour coopérer avec la surface d'appui du rail de retenue.

Selon un mode de réalisation de l'invention, les galets de retenue primaires, les galets de retenue secondaires, les galets d'appui primaires supérieurs et les galets d'appui secondaires supérieurs s'étendent sensiblement dans un même plan d'extension.

Selon un mode de réalisation de l'invention, le rail de retenue comporte une première portion de rail qui s'étend sensiblement parallèlement au rail de guidage et qui est écartée du rail de guidage d'une première distance, et une deuxième portion de rail qui s'étend sensiblement parallèlement au rail de guidage et qui est écartée du rail de guidage d'une deuxième distance différente de la première distance, la deuxième portion de rail étant située en aval de la première portion de rail, et dans lequel le rail de retenue est configuré de telle sorte qu'un déplacement des premiers et deuxièmes éléments de retenue de la première portion de rail à la deuxième portion de rail entraîne une déformation des première et deuxième chaînes sans fin entre les premier et deuxième états.

Selon un mode de réalisation de l'invention, le rail de retenue comporte une portion de transition reliant la première portion de rail et la deuxième portion de rail. Avantageusement, la portion de transition forme une rampe inclinée.

Selon un mode de réalisation de l'invention, la deuxième distance est inférieure à la première distance, et le rail de retenue est configuré de telle sorte qu'un déplacement des premiers et deuxièmes éléments de retenue de la première portion de rail à la deuxième portion de rail entraîne une déformation des première et deuxième chaînes sans fin du premier état au deuxième état de manière à induire un étirage longitudinal du film.

Selon un mode de réalisation de l'invention, la deuxième distance est supérieure à la première distance, et le rail de retenue est configuré de telle sorte qu'un déplacement des premiers et deuxièmes éléments de retenue de la première portion de rail à la deuxième portion de rail entraîne une déformation des première et deuxième chaînes sans fin du deuxième état au premier état de manière à induire une relaxation longitudinale du film.

Selon un mode de réalisation de l'invention, les premiers et deuxièmes éléments d'articulation appartenant à la première chaîne sans fin sont distincts et séparés mécaniquement des premiers et deuxièmes organes d'articulation appartenant à la deuxième chaîne sans fin.

Selon un mode de réalisation de l'invention, chaque premier élément d'articulation est situé en regard d'un deuxième organe d'articulation respectif et est espacé du deuxième organe d'articulation respectif d'une distance de séparation qui varie en fonction de l'état occupé par les première et deuxième chaînes sans fin, et chaque deuxième élément d'articulation est situé en regard d'un premier organe d'articulation respectif et est espacé du premier organe d'articulation respectif d'une distance d'espacement qui varie en fonction de l'état occupé par les première et deuxième chaînes sans fin.

Selon un mode de réalisation de l'invention, la distance de séparation est égale à une première valeur de séparation lorsque les première et deuxième chaînes sans fin sont dans le premier état et est également à une deuxième valeur de séparation lorsque les première et deuxième chaînes sans fin sont dans le deuxième état, la deuxième valeur de séparation étant inférieure à la première valeur de séparation.

Selon un mode de réalisation de l'invention, la distance d'espacement est égale à une première valeur d'espacement lorsque les première et deuxième chaînes sans fin sont dans le premier état et est également à une deuxième valeur d'espacement lorsque les première et deuxième chaînes sans fin sont dans le deuxième état, la deuxième valeur d'espacement étant inférieure à la première valeur d'espacement.

Selon un mode de réalisation de l'invention, la portion de transition est configurée pour diminuer la force de retenue appliquée sur chaque deuxième élément d'articulation et sur chaque deuxième organe d'articulation afin de déformer les première et deuxième chaînes sans fin dans le deuxième état.

Selon un mode de réalisation de l'invention, la portion de transition est configurée pour augmenter la force de retenue appliquée sur chaque deuxième élément d'articulation et sur chaque deuxième organe d'articulation afin de déformer les première et deuxième chaînes sans fin dans le premier état.

Selon un mode de réalisation de l'invention, chaque premier élément de retenue comporte un galet de roulement primaire configuré pour rouler sur une surface supérieure du rail de retenue, et chaque deuxième élément de retenue comporte un galet de roulement secondaire configuré pour rouler sur la surface supérieure du rail de retenue. Avantageusement, le galet de roulement primaire de chaque premier élément de retenue a un axe de rotation sensiblement horizontal, et le galet de roulement secondaire de chaque deuxième élément de retenue a un axe de rotation sensiblement horizontal.

Selon un mode de réalisation de l'invention, le dispositif d'étirage comporte en outre une pluralité de premiers éléments de retenue additionnels et une pluralité de deuxièmes éléments de retenue additionnels disposés alternativement le long du rail de retenue et configurés pour être guidés par le rail de retenue, chaque premier élément de retenue additionnel étant monté sur un deuxième élément d'articulation respectif de la première chaîne sans fin et étant décalé verticalement par rapport au premier élément de retenue monté sur le deuxième élément d'articulation respectif, chaque deuxième élément de retenue additionnel étant monté sur un deuxième organe d'articulation respectif de la deuxième chaîne sans fin et étant décalé verticalement par rapport au deuxième élément de retenue monté sur le deuxième organe d'articulation respectif, chaque premier élément de retenue additionnel et chaque deuxième élément de retenue additionnel étant configurés pour être entraînés respectivement par la première chaîne sans fin et la deuxième chaîne sans fin le long du rail de retenue.

Selon un mode de réalisation de l'invention, les premiers éléments de retenue additionnels sont sensiblement identiques aux deuxièmes éléments de retenue additionnels.

Selon un mode de réalisation de l'invention, chaque premier élément de retenue additionnel comporte un galet de retenue primaire additionnel configuré pour coopérer avec la surface de retenue du rail de retenue, et chaque deuxième élément de retenue additionnel comporte un galet de retenue secondaire additionnel configuré pour coopérer avec la surface de retenue du rail de retenue.

Selon un mode de réalisation de l'invention, le galet de retenue primaire additionnel de chaque premier élément de retenue additionnel a un axe de rotation sensiblement vertical, et le galet de retenue secondaire additionnel de chaque deuxième élément de retenue additionnel a un axe de rotation sensiblement vertical.

Selon un mode de réalisation de l'invention, chaque premier élément de retenue additionnel comporte un galet de roulement primaire additionnel configuré pour rouler sur une surface inférieure du rail de retenue, et chaque deuxième élément de retenue additionnel comporte un galet de roulement secondaire additionnel configuré pour rouler sur la surface inférieure du rail de retenue. Avantageusement, le galet de roulement primaire additionnel de chaque premier élément de retenue additionnel a un axe de rotation sensiblement horizontal, et le galet de roulement secondaire additionnel de chaque deuxième élément de retenue additionnel a un axe de rotation sensiblement horizontal.

Selon un mode de réalisation de l'invention, les galets de retenue primaires additionnels, les galets de retenue secondaires additionnels, les galets d'appui primaires inférieurs et les galets d'appui secondaires inférieurs s'étendent sensiblement dans un même plan d'extension.

Selon un mode de réalisation de l'invention, le dispositif d'étirage comporte en outre une pluralité de premiers éléments de guidage et une pluralité de deuxièmes éléments de guidage disposés alternativement le long du rail de guidage et configurés pour être guidés par le rail de guidage, chaque premier élément de guidage étant monté sur un premier élément d'articulation respectif de la première chaîne sans fin et étant décalé verticalement par rapport à la première pince montée sur le premier élément d'articulation respectif, chaque deuxième élément de guidage étant monté sur un premier organe d'articulation respectif de la deuxième chaîne sans fin et étant décalé verticalement par rapport à la deuxième pince montée sur le premier organe d'articulation respectif, chaque premier élément de guidage et chaque deuxième élément de guidage étant configurés pour être entraînés respectivement par la première chaîne sans fin et la deuxième chaîne sans fin le long du rail de guidage.

Selon un mode de réalisation de l'invention, les premiers éléments de guidage sont sensiblement identiques aux deuxièmes éléments de guidage.

Selon un mode de réalisation de l'invention, chaque premier élément de guidage comporte un galet de guidage primaire additionnel configuré pour coopérer avec la première surface de guidage du rail de guidage, et chaque deuxième élément de guidage comporte un galet de guidage secondaire additionnel configuré pour coopérer avec la première surface de guidage du rail de guidage.

Selon un mode de réalisation de l'invention, le galet de guidage primaire additionnel de chaque premier élément de guidage a un axe de rotation sensiblement vertical, et le galet de guidage secondaire additionnel de chaque deuxième élément de guidage a un axe de rotation sensiblement vertical.

Selon un mode de réalisation de l'invention, chaque premier élément de guidage comporte un premier galet de roulement additionnel configuré pour rouler sur une surface inférieure du rail de guidage, et chaque deuxième élément de guidage comporte un deuxième galet de roulement additionnel configuré pour rouler sur la surface inférieure du rail de guidage. Avantageusement, le premier galet de roulement additionnel de chaque premier élément de guidage a un axe de rotation sensiblement horizontal, et le deuxième galet de roulement additionnel de chaque deuxième élément de guidage a un axe de rotation sensiblement horizontal.

Selon un mode de réalisation de l'invention, les galets de guidage primaires additionnels, les galets de guidage secondaires additionnels, les premiers galets d'appui inférieurs et les deuxièmes galets d'appui inférieurs s'étendent sensiblement dans un même plan d'extension.

Selon un mode de réalisation de l'invention, chaque premier élément de guidage est configuré pour venir en butée contre un deuxième élément de retenue additionnel respectif lorsque les première et deuxième chaînes sans fin sont dans le deuxième état, et chaque deuxième élément de guidage est configuré pour venir en butée contre un premier élément de retenue additionnel respectif lorsque les première et deuxième chaînes sans fin sont dans le deuxième état.

Selon un mode de réalisation de l'invention, les première et deuxième chaînes sans fin sont configurées de telle sorte que les premières et deuxièmes pinces sont en appui les unes contre les autres lorsque les première et deuxième chaîne sans fin sont dans le premier état.

Selon un mode de réalisation de l'invention, les première et deuxième chaînes sans fin sont configurées de telle sorte que les premiers et deuxièmes éléments de retenue sont en appui les uns contre les autres lorsque les première et deuxième chaîne sans fin sont dans le premier état.

Selon un mode de réalisation de l'invention, les première et deuxième chaînes sans fin sont configurées de telle sorte que les premiers et deuxièmes éléments de retenue additionnels sont en appui les uns contre les autres lorsque les première et deuxième chaîne sans fin sont dans le premier état.

Selon un mode de réalisation de l'invention, les première et deuxième chaînes sans fin sont configurées de telle sorte que les premiers et deuxièmes éléments de guidage sont en appui les uns contre les autres lorsque les première et deuxième chaîne sans fin sont dans le premier état.

Selon un mode de réalisation de l'invention, chaque première pince comporte un premier corps de pince et deux premiers patins d'appui latéraux qui sont disposés de part et d'autre du premier corps de pince respectif et qui sont décalés le long du rail de guidage, et chaque deuxième pince comporte un deuxième corps de pince et deux deuxièmes patins d'appui latéraux qui sont disposés de part et d'autre du deuxième corps de pince respectif et qui sont décalés le long du rail de guidage, les première et deuxième chaînes sans fin étant configurées de telle sorte que, lorsque les première et deuxième chaînes sans fin sont dans le premier état, chaque premier patin d'appui latéral prend appui contre un deuxième patin d'appui latéral d'une deuxième pince adjacente.

Selon un mode de réalisation de l'invention, chaque premier patin d'appui latéral comporte une première surface d'appui plane qui est configurée pour coopérer avec une deuxième surface d'appui plane prévue sur le deuxième patin d'appui latéral respectif. De façon avantageuse, les premières et deuxièmes surfaces d'appui planes s'étendent sensiblement perpendiculairement au rail de guidage.

Selon un mode de réalisation de l'invention, chaque premier élément de retenue comporte un premier corps de support et deux premiers patins d'appui latéraux additionnels qui sont disposés de part et d'autre du premier corps de support respectif et qui sont décalés le long du rail de retenue, et chaque deuxième élément de retenue comporte un deuxième corps de support et deux deuxièmes patins d'appui latéraux additionnels qui sont disposés de part et d'autre du deuxième corps de support respectif et qui sont décalés le long du rail de retenue, les première et deuxième chaînes sans fin étant configurées de telle sorte que, lorsque les première et deuxième chaînes sans fin sont dans le premier état, chaque premier patin d'appui latéral additionnel prend appui contre un deuxième patin d'appui latéral additionnel d'un deuxième élément de retenue adjacent.

Selon un mode de réalisation de l'invention, les premières et deuxièmes pinces sont sensiblement alignées le long du rail de guidage.

Selon un mode de réalisation de l'invention, les premiers et deuxièmes éléments de retenue sont sensiblement alignés le long du rail de guidage.

La présente invention concerne en outre un système d'étirage pour étirer un film en matière synthétique au moins dans un sens transversal, comprenant deux dispositifs d'étirage selon la présente invention disposés de part et d'autre du film, les premières et deuxièmes pinces de l'un des dispositifs d'étirage étant agencées pour saisir un premier bord longitudinal du film et les premières et deuxièmes pinces de l'autre des dispositifs d'étirage étant agencées pour saisir un deuxième bord longitudinal du film.

Selon un mode de réalisation de l'invention, le système d'étirage est configuré pour étirer le film en matière synthétique au moins dans un sens longitudinal, et par exemple dans un sens transversal et dans un sens longitudinal.

Selon un mode de réalisation de l'invention, le système d'étirage est également configuré pour réaliser une relaxation longitudinale du film en matière synthétique, par exemple après l'étirage de ce dernier.

Selon un mode de réalisation de l'invention, le système d'étirage comporte un four, et les rails de guidage des deux dispositifs d'étirage s'étendent au moins en partie dans le four.

Selon un mode de réalisation de l'invention, les rails de guidage des deux dispositifs d'étirage divergent l'un par rapport à l'autre dans une première zone du système d'étirage.

Selon un mode de réalisation de l'invention, les rails de guidage des deux dispositifs d'étirage s'étendent sensiblement parallèlement l'un par rapport à l'autre dans une deuxième zone du système d'étirage située en aval de la première zone du système d'étirage.

Selon un mode de réalisation de l'invention, la deuxième portion de rail de chaque rail de retenue est située au moins en partie dans la première zone du système d'étirage. Ces dispositions permettent d'assurer un étirage longitudinal ou une relaxation longitudinale du film simultanément à un étirage transversal du film.

Selon un mode de réalisation de l'invention, la portion de transition de chaque rail de retenue est située au moins en partie dans la deuxième zone du système d'étirage. Ces dispositions permettent d'assurer un étirage longitudinal ou une relaxation longitudinale du film après un étirage transversal du film.

De toute façon l'invention sera bien comprise à l'aide de la description qui suit en référence aux dessins schématiques annexés représentant, à titre d'exemple non limitatif, une forme d'exécution de ce système d'étirage.
[Fig 1] Figure 1 est une vue d'ensemble d'une installation de production d'un film en matière synthétique.
[Fig 2] Figure 2 est une vue partielle en perspective d'un dispositif d'étirage appartenant à l'installation de production de la figure 1 montrant des première et deuxième chaînes sans fin du dispositif d'étirage dans un premier état.
[Fig 3] Figure 3 est une vue partielle en perspective du dispositif d'étirage de la figure 2 montrant les première et deuxième chaînes sans fin du dispositif d'étirage dans un deuxième état.
[Fig 4] Figure 4 est une vue partielle de côté du dispositif d'étirage de la figure 2.
[Fig 5] Figure 5 est une vue en coupe transversale du dispositif d'étirage de la figure 2.
[Fig 6] Figure 6 est une vue partielle de dessus du dispositif d'étirage de la figure 2, montrant les première et deuxième chaînes sans fin dans le premier état.
[Fig 7] Figure 7 est une vue partielle de dessus du dispositif d'étirage de la figure 2, montrant les première et deuxième chaînes sans fin dans un état intermédiaire.
[Fig 8] Figure 8 est une vue partielle de dessus du dispositif d'étirage de la figure 2, montrant les première et deuxième chaînes sans fin dans le deuxième état.
[Fig 9] Figure 9 est une vue partielle en perspective du dispositif d'étirage de la figure 2, montrant plus particulièrement une poulie de renvoi du dispositif d'étirage.
[Fig 10] Figure 10 est une vue partielle de dessus du dispositif d'étirage de la figure 2.
[Fig 11] Figure 11 est une vue partielle de dessus d'un rail de guidage et d'un rail de retenue appartenant au dispositif d'étirage de la figure 2.

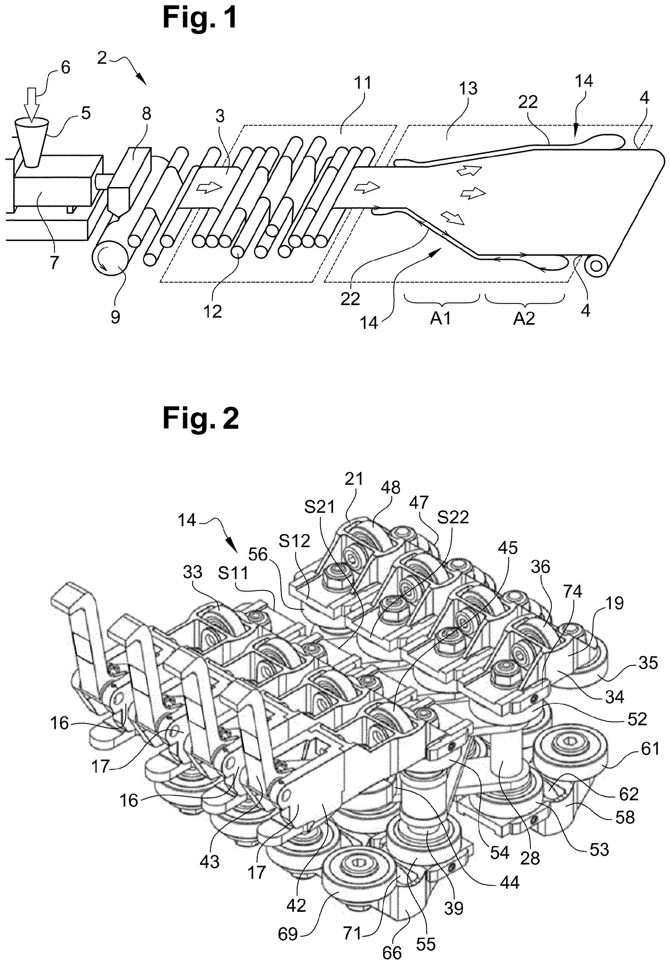

La figure 1 représente une installation de production 2 pour la production d'un film 3 en matière synthétique présentant deux bords longitudinaux4 sensiblement parallèles.

L'installation de production 2 comporte successivement :
- un système d'alimentation 5 en matière synthétique 6,
- une extrudeuse 7 alimentée en matière synthétique par le système d'alimentation 5, et comprenant une filière d'extrusion 8,
- un tambour de coulée 9 qui est disposé sous la filière d'extrusion 8 et sur lequel est formé le film 3 par écoulement de la matière synthétique 6 à l'état fondue,
- un système d'étirage longitudinal 11 pour étirer le film 3 dans le sens longitudinal, le système d'étirage longitudinal 11 comportant par exemple des rouleaux 12 à différentiel de vitesse pour emporter et étirer le film 3, et
- un système d'étirage 13 pour étirer le film 3 au moins dans le sens transversal.

Le système d'étirage 13 comporte un four (non représenté sur les figures) permettant de réguler la température du film 3 pendant son étirage dans le sens transversal, et deux dispositifs d'étirage 14 disposés de part et d'autre du film 3.

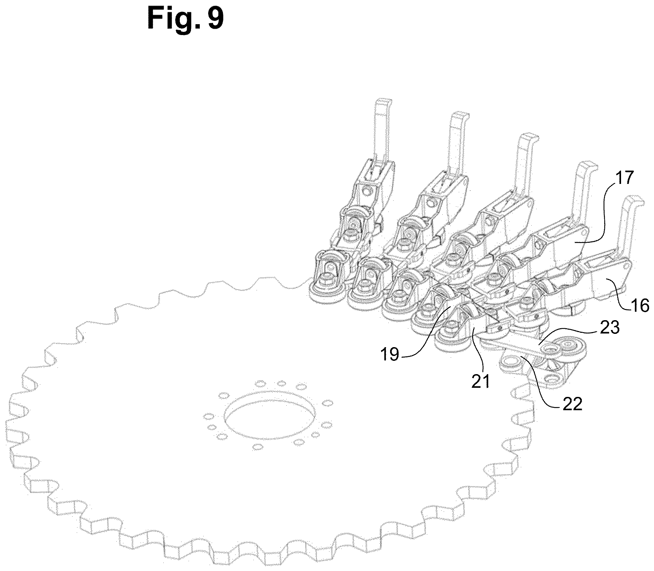

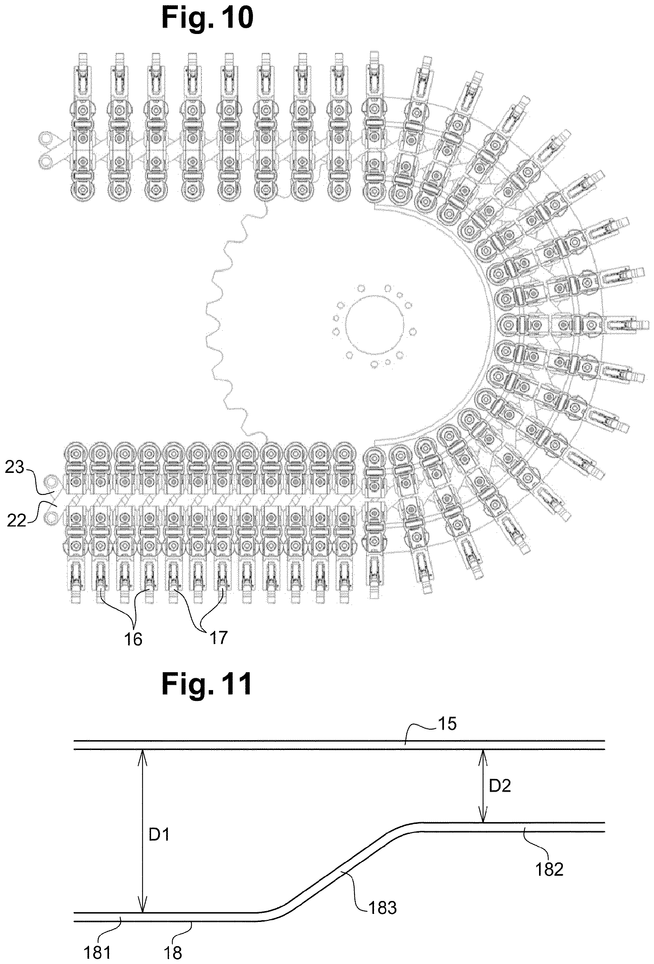

Comme montré sur les figures 2 à 10, chaque dispositif d'étirage 14 comporte plus particulièrement :
- un rail de guidage 15 s'étendent au moins en partie dans le four et comportant une première surface de guidage 15.1 tournée vers le film 3 et une deuxième surface de guidage 15.2 opposée à la première surface de guidage 15.1,
- une pluralité de premières pinces 16 et une pluralité de deuxièmes pinces 17 destinées chacune à saisir un bord longitudinal 4 correspondant du film 3, les premières et deuxièmes pinces 16, 17 étant disposées alternativement le long du rail de guidage 15 respectif et étant configurées pour être guidées en translation par le rail de guidage 15 respectif,
- un rail de retenue 18 s'étendant le long du rail de guidage 15 respectif, le rail de retenue 18 comportant une surface d'appui 18.1 tournée vers le rail de guidage 15 respectif et une surface de retenue 18.2 opposée à la surface d'appui 18.1,
- une pluralité de premiers éléments de retenue 19 et une pluralité de deuxièmes éléments de retenue 21 disposés alternativement le long du rail de retenue 18 et configurés pour être guidés en translation par le rail de retenue 18,
- une première chaîne sans fin 22 configurée pour entraîner les premières pinces 16 le long du rail de guidage 15 respectif, et pour entraîner les premiers éléments de retenue 19 respectifs le long du rail de retenue 18 respectif,
- une deuxième chaîne sans fin 23 configurée pour entraîner les deuxièmes pinces 17 le long du rail de guidage 15 respectif, et pour entraîner les deuxièmes éléments de guidage 21 respectifs le long du rail de retenue 18 respectif.

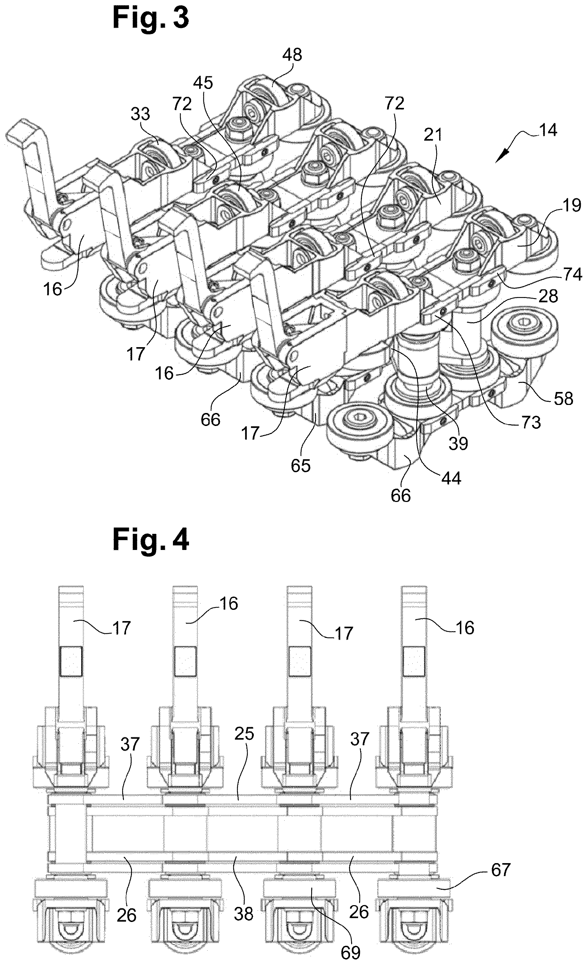

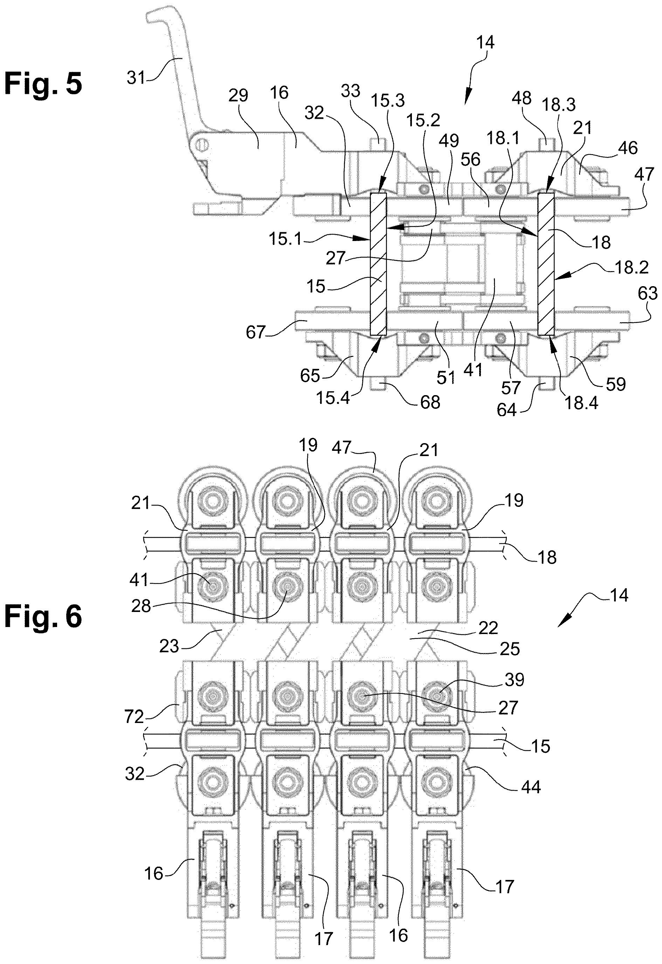

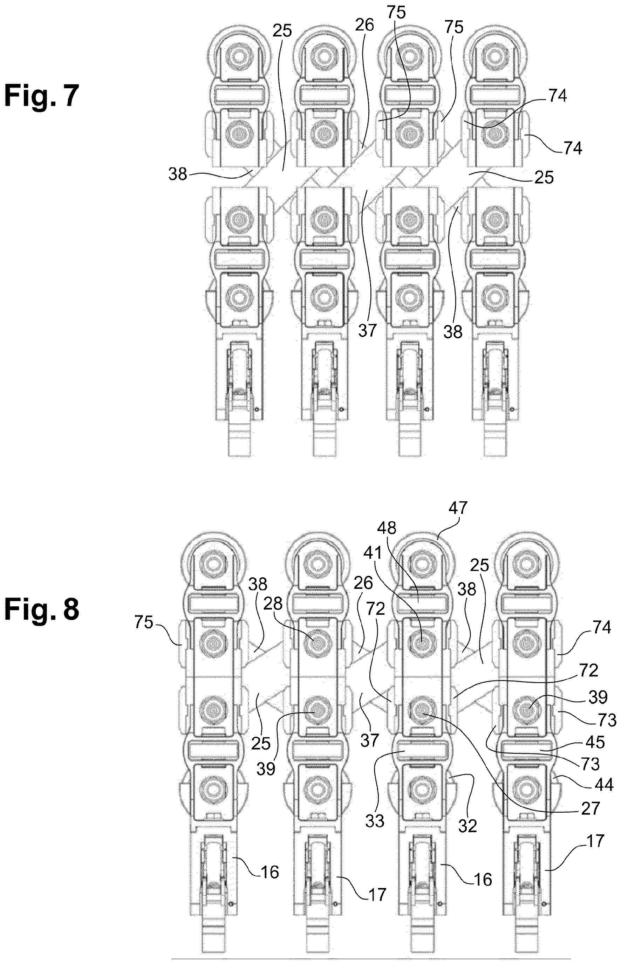

Les première et deuxième chaînes sans fin 22, 23 de chaque dispositif d'étirage 14 sont imbriquées l'une dans l'autre, et sont déformables entre un premier état (voir les figures 2 et 6) dans lequel les premières et deuxièmes pinces 16, 17 sont disposées à proximité les unes des autres, et par exemple en appui les unes contre les autres, et un deuxième état (voir les figures 3 et 8) dans lequel les premières et deuxièmes pinces 16, 17 sont éloignées les unes des autres.

Comme cela ressort de la figure 1, les rails de guidage 15 des deux dispositifs d'étirage 14 divergent l'un par rapport à l'autre dans une première zone A1 du système d'étirage 13 située dans le four, et s'étendent sensiblement parallèlement l'un par rapport à l'autre dans une deuxième zone A2 du système d'étirage 13 située en aval de la première zone A1 du système d'étirage 13, et qui peut être située soit dans ou en dehors du four. Selon le mode de réalisation représenté sur les figures, chaque rail de guidage 15 présente une section sensiblement rectangulaire, et chaque rail de retenue 18 présente également une section sensiblement rectangulaire.

Comme montré notamment sur les figures 5 à 8, chaque première chaîne sans fin 22 comporte des premiers maillons primaire 25 et des deuxièmes maillons primaires 26 disposés de manière alternée le long de la première chaîne sans fin 22 et montés articulés les uns par rapport aux autres, et en outre des premiers éléments d'articulation 27 et des deuxièmes éléments d'articulation 28 disposés de manière alternée le long de la première chaîne sans fin 22 et autour desquels sont montés articulés les premiers et deuxièmes maillons primaires 25, 26. Les premiers et deuxièmes éléments d'articulation 27, 28 s'étendent sensiblement verticalement.

Chaque première pince 16 comporte un premier corps de pince 29 monté articulé sur un premier élément d'articulation 27 respectif, et un doigt de préhension 31 monté pivotant sur le premier corps de pince 29 et configuré pour saisir le film 3. Chaque première pince 16 comporte en outre un galet de guidage primaire 32 ayant un axe de rotation sensiblement vertical et configuré pour coopérer avec la première surface de guidage 15.1 du rail de guidage 15, et un premier galet de roulement 33 ayant un axe de rotation sensiblement horizontal et configuré pour rouler sur une surface supérieure 15.3 du rail de guidage 15.

Chaque premier élément de retenue 19 comporte un premier corps de support 34 monté articulé sur un deuxième élément d'articulation 28 respectif, et un galet de retenue primaire 35 ayant un axe de rotation sensiblement vertical et configuré pour coopérer avec la surface de retenue 18.2 du rail de retenue 18. Chaque galet de retenue primaire 35 est agencé pour être retenu par le rail de guidage 18 de manière à appliquer une force de retenue sur le deuxième élément d'articulation 28 respectif. Chaque premier élément de retenue 19 comporte en outre un galet de roulement primaire 36 ayant un axe de rotation sensiblement horizontal et configuré pour rouler sur une surface supérieure 18.3 du rail de retenue 18.

Comme montré notamment sur les figures 5 à 8, chaque deuxième chaîne sans fin 23 comporte des premiers maillons secondaires 37 et des deuxièmes maillons secondaires 38 disposés de manière alternée le long de la deuxième chaîne sans fin 23 et montés articulés les uns par rapport aux autres, et en outre des premiers organes d'articulation 39 et des deuxièmes organes d'articulation 41 disposés de manière alternée le long de la deuxième chaîne sans fin 23 et autour desquels sont montés articulés les premiers et deuxièmes maillons secondaires 37, 38. De façon avantageuse, les premiers et deuxièmes organes d'articulation 39, 41 s'étendent sensiblement verticalement, et les premiers et deuxièmes maillons primaires 25, 26 de la première chaîne sans fin 22 et les premiers et deuxièmes maillons secondaires 37, 38 de la deuxième chaîne sans fin 23 sont imbriqués les uns dans les autres.

Chaque deuxième pince 17 comporte un deuxième corps de pince 42 monté articulé sur un premier organe d'articulation 39 respectif, et un doigt de préhension 43 monté pivotant sur le deuxième corps de pince 42 et configuré pour saisir le film 3. Chaque deuxième pince 17 comporte en outre un galet de guidage secondaire 44 ayant un axe de rotation sensiblement vertical et configuré pour coopérer avec la première surface de guidage 15.1 du rail de guidage 15, et un deuxième galet de roulement 45 ayant un axe de rotation sensiblement horizontal et configuré pour rouler sur la surface supérieure 15.3 du rail de guidage 15.

Chaque deuxième élément de retenue 21 comporte un deuxième corps de support 46 monté articulé sur un deuxième organe d'articulation 41 respectif, et un galet de retenue secondaire 47 ayant un axe de rotation sensiblement vertical et configuré pour coopérer avec la surface de retenue 18.2 du rail de retenue 18. Chaque galet de retenue secondaire 47 est agencé pour être retenu par le rail de guidage 18 de manière à appliquer une force de retenue sur le deuxième organe d'articulation 41 respectif. Chaque deuxième élément de retenue 21 comporte en outre un galet de roulement secondaire 48 ayant un axe de rotation sensiblement horizontal et configuré pour rouler sur la surface supérieure 18.3 du rail de retenue 18.

De façon avantageuse, chaque première pince 16 est située en regard d'un deuxième organe d'articulation 41 respectif, et est configurée pour venir en butée contre un deuxième élément de retenue 21 respectif lorsque les première et deuxième chaînes sans fin 22, 23 sont dans le deuxième état, tandis que chaque deuxième pince 17 est située en regard d'un deuxième élément d'articulation 28 respectif, et est configurée pour venir en butée contre un premier élément de retenue 19 respectif lorsque les première et deuxième chaînes sans fin 22, 23 sont dans le deuxième état.

Selon le mode de réalisation représenté sur les figures, le premier corps de pince 29 de chaque première pince 16 comporte une première surface de butée plane S11 configurée pour venir en butée contre une deuxième surface de butée plane S12 prévue sur le deuxième corps de support 46 du deuxième élément de retenue 21 respectif lorsque les première et deuxième chaînes sans fin 22, 23 sont dans le deuxième état, et le deuxième corps de pince 42 de chaque deuxième pince 17 comporte une surface de butée primaire plane S21 configurée pour venir en butée contre une surface de butée secondaire plane S22 prévue sur le premier corps de support 34 du premier élément de retenue 19 respectif lorsque les première et deuxième chaînes sans fin 22, 23 sont dans le deuxième état. La première surface de butée plane S11, la deuxième surface de butée plane S12, la surface de butée primaire plane S21 et la surface de butée secondaire plane S22 s'étendent sensiblement parallèlement au rail de guidage 15 respectif.

De façon avantageuse, les première et deuxième chaînes sans fin 22, 23 de chaque dispositif d'étirage 14 sont également configurées de telle sorte que les premiers et deuxièmes éléments de retenue 19, 21 sont en appui les uns contre les autres lorsque les première et deuxième chaîne sans fin 22, 23 sont dans le premier état.

Selon le mode de réalisation représenté sur les figures, chaque premier élément d'articulation 27 porte un premier galet d'appui supérieur 49 et un premier galet d'appui inférieur 51 qui sont décalés verticalement et qui sont configurés pour coopérer avec la deuxième surface de guidage 15.2 du rail de guidage 15. Chacun des premiers galets d'appui supérieur et inférieur 49, 51 a avantageusement un axe de rotation sensiblement vertical. Chaque deuxième élément d'articulation 28 porte également un galet d'appui primaire supérieur 52 et un galet d'appui primaire inférieur 53 qui sont décalés verticalement et qui sont configurés pour coopérer avec la surface d'appui 18.1 du rail de retenue 18. Chacun des galets d'appui primaires supérieur et inférieur 52, 53 a avantageusement un axe de rotation sensiblement vertical.

Selon le mode de réalisation représenté sur les figures, chaque premier organe d'articulation 39 porte également un deuxième galet d'appui supérieur 54 et un deuxième galet d'appui inférieur 55 qui sont décalés verticalement et qui sont configurés pour coopérer avec la deuxième surface de guidage 15.2 du rail de guidage 15. Chacun des deuxième galets d'appui supérieur et inférieur 54, 55 a avantageusement un axe de rotation sensiblement vertical. Chaque deuxième organe d'articulation 41 porte également un galet d'appui secondaire supérieur 56 et un galet d'appui secondaire inférieur 57 qui sont décalés verticalement et qui sont configurés pour coopérer avec la surface d'appui 18.1 du rail de retenue 18. Chacun des galets d'appui secondaires supérieur et inférieur 56, 57 a avantageusement un axe de rotation sensiblement vertical.

Chaque dispositif d'étirage 14 comporte en outre une pluralité de premiers éléments de retenue additionnels 58 et une pluralité de deuxièmes éléments de retenue additionnels 59 disposés alternativement le long du rail de retenue 18 et configurés pour être guidés par le rail de retenue 18. Chaque premier élément de retenue additionnel 58 et chaque deuxième élément de retenue additionnel 59 sont configurés pour être entraînés respectivement par les première et deuxièmes chaînes sans fin 22, 23 respectives le long du rail de retenue 18.

Chaque premier élément de retenue additionnel 58 est monté sur un deuxième élément d'articulation 28 respectif de la première chaîne sans fin 22 et est décalé verticalement par rapport au premier élément de retenue 19 monté sur le deuxième élément d'articulation 28 respectif. De façon avantageuse, chaque premier élément de retenue additionnel 58 comporte un galet de retenue primaire additionnel 61 qui a un axe de rotation sensiblement vertical et qui est configuré pour coopérer avec la surface de retenue 18.2 du rail de retenue 18, et également un galet de roulement primaire additionnel 62 qui a un axe de rotation sensiblement horizontal et qui est configuré pour rouler sur une surface inférieure 18.4 du rail de retenue 18.

Chaque deuxième élément de retenue additionnel 59 est monté sur un deuxième organe d'articulation 41 respectif de la deuxième chaîne sans fin 23 respective et est décalé verticalement par rapport au deuxième élément de retenue 21 monté sur le deuxième organe d'articulation 41 respectif. De façon avantageuse, chaque deuxième élément de retenue additionnel 59 comporte un galet de retenue secondaire additionnel 63 ayant un axe de rotation sensiblement vertical et configuré pour coopérer avec la surface de retenue 18.2 du rail de retenue 18, et également un galet de roulement secondaire additionnel 64 ayant un axe de rotation sensiblement horizontal et configuré pour rouler sur la surface inférieure 18.4 du rail de retenue 18.

Chaque dispositif d'étirage 14 comporte en outre une pluralité de premiers éléments de guidage 65 et une pluralité de deuxièmes éléments de guidage 66 disposés alternativement le long du rail de guidage 15 et configurés pour être guidés par le rail de guidage 15. Chaque premier élément de guidage 65 et chaque deuxième élément de guidage 66 sont configurés pour être entraînés respectivement par les première et deuxième chaînes sans fin 22, 23 respectives le long du rail de guidage 15 respectif.

Chaque premier élément de guidage 65 est monté sur un premier élément d'articulation 27 respectif de la première chaîne sans fin 22 respective et est décalé verticalement par rapport à la première pince 16 montée sur le premier élément d'articulation 27 respectif. De façon avantageuse, chaque premier élément de guidage 65 comporte un galet de guidage primaire additionnel 67 qui a un axe de rotation sensiblement vertical et qui est configuré pour coopérer avec la première surface de guidage 15.1 du rail de guidage 15 respectif, et également un premier galet de roulement additionnel 68 qui a un axe de rotation sensiblement horizontal et qui est configuré pour rouler sur une surface inférieure 15.4 du rail de guidage 15 respectif.

Chaque deuxième élément de guidage 66 est monté sur un premier organe d'articulation 39 respectif de la deuxième chaîne sans fin 22 respective et est décalé verticalement par rapport à la deuxième pince 17 montée sur le premier organe d'articulation 39 respectif. De façon avantageuse, chaque deuxième élément de guidage 66 comporte un galet de guidage secondaire additionnel 69 qui a un axe de rotation sensiblement vertical et qui est configuré pour coopérer avec la première surface de guidage 15.1 du rail de guidage 15 respectif, et également un deuxième galet de roulement additionnel 71 qui a un axe de rotation sensiblement horizontal et qui est configuré pour rouler sur la surface inférieure 15.4 du rail de guidage 15 respectif.

Selon le mode de réalisation représenté sur les figures, les galets de guidage primaires 32, les galets de guidage secondaires 44, les galets de retenue primaires 35, les galets de retenue secondaires 47, les premiers galets d'appui supérieurs 49, les deuxièmes galets d'appui supérieurs 54, les galets d'appui primaires supérieurs 52 et les galets d'appui secondaires supérieurs 56 s'étendent sensiblement dans un même plan d'extension.

Selon le mode de réalisation représenté sur les figures, les galets de guidage primaires additionnels 67, les galets de guidage secondaires additionnels 69, les premiers galets d'appui inférieurs 51, les deuxièmes galets d'appui inférieurs 55, les galets de retenue primaires additionnels 61, les galets de retenue secondaires additionnels 63, les galets d'appui primaires inférieurs 53 et les galets d'appui secondaires inférieurs 57 s'étendent sensiblement dans un même plan d'extension.

Selon le mode de réalisation représenté sur les figures, chaque premier élément de guidage 65 est configuré pour venir en butée contre un deuxième élément de retenue additionnel 59 respectif lorsque les première et deuxième chaînes sans fin 22, 23 respectives sont dans le deuxième état, et chaque deuxième élément de guidage 66 est configuré pour venir en butée contre un premier élément de retenue additionnel 58 respectif lorsque les première et deuxième chaînes sans fin 22, 23 respectives sont dans le deuxième état.

De façon avantageuse, les première et deuxième chaînes sans fin 22, 23 de chaque dispositif d'étirage 14 sont configurées de telle sorte que les premiers et deuxièmes éléments de retenue additionnels 58, 59 respectifs sont en appui les uns contre les autres lorsque les première et deuxième chaîne sans fin 22, 23 sont dans le premier état, et de telle sorte que les premiers et deuxièmes éléments de guidage 65, 66 sont en appui les uns contre les autres lorsque les première et deuxième chaîne sans fin 22, 23 sont dans le premier état.

Selon le mode de réalisation représenté sur les figures, chaque première pince 16 comporte en outre deux premiers patins d'appui latéraux 72 qui sont disposés de part et d'autre du premier corps de pince 29 respectif et qui sont décalés le long du rail de guidage 15, et chaque deuxième pince 17 comporte deux deuxièmes patins d'appui latéraux 73 qui sont disposés de part et d'autre du deuxième corps de pince 42 respectif et qui sont décalés le long du rail de guidage 15. Les première et deuxième chaînes sans fin 22, 23 de chaque dispositif d'étirage 14 sont configurées de telle sorte que, lorsque les première et deuxième chaînes sans fin 22, 23 sont dans le premier état, chaque premier patin d'appui latéral 72 prend appui contre un deuxième patin d'appui latéral 73 d'une deuxième pince 17 adjacente.

De façon avantageuse, chaque premier élément de retenue 19 comporte deux premiers patins d'appui latéraux additionnels 74 qui sont disposés de part et d'autre du premier corps de support 34 respectif et qui sont décalés le long du rail de retenue 18 respectif, et chaque deuxième élément de retenue 21 comporte deux deuxièmes patins d'appui latéraux additionnels 75 qui sont disposés de part et d'autre du deuxième corps de support 46 respectif et qui sont décalés le long du rail de retenue 18 respectif. Les première et deuxième chaînes sans fin 22, 23 de chaque dispositif d'étirage 14 sont configurées de telle sorte que, lorsque les première et deuxième chaînes sans fin 22, 23 sont dans le premier état, chaque premier patin d'appui latéral additionnel 74 prend appui contre un deuxième patin d'appui latéral additionnel 75 d'un deuxième élément de retenue 21 adjacent.

De façon similaires, les premiers et deuxièmes éléments de guidage 65, 66 et les premiers et deuxièmes éléments de retenue additionnels 58, 59 peuvent être pourvus de patins d'appui.

Comme montré sur la figue 11, chaque rail de retenue 18 comporte une première portion de rail 181 qui s'étend sensiblement parallèlement au rail de guidage 15 respectif et qui est écartée du rail de guidage 15 respectif d'une première distance D1, et une deuxième portion de rail 182 qui est située en aval de la première portion de rail 181 et qui s'étend sensiblement parallèlement au rail de guidage 15 respectif, la deuxième portion de rail 182 étant écartée du rail de guidage 15 respectif d'une deuxième distance D2 différente de la première distance D1. Chaque rail de retenue 18 comporte en outre une portion de transition 183 reliant les première et deuxième portions de rail 181, 182 respectives. Avantageusement, chaque portion de transition 183 forme une rampe inclinée.

Chaque rail de retenue 18 est plus particulièrement configuré de telle sorte qu'un déplacement des premiers et deuxièmes éléments de retenue 19, 21 de la première portion de rail 181 à la deuxième portion de rail 182 entraîne une déformation des première et deuxième chaînes sans fin 22, 23 respectives entre les premier et deuxième états.

Avantageusement, la portion de transition 183 de chaque rail de retenue 18 est située dans la première zone A1 du système d'étirage 13. Ces dispositions permettent d'assurer une déformation des premières et deuxièmes chaînes sans fin entre les premier et deuxième états dans la première zone A1 du système d'étirage 13, et donc d'assurer un étirage longitudinal ou une relaxation longitudinale du film 3 simultanément à un étirage transversal de ce dernier.

Le fonctionnement du système d'étirage 13 va maintenant être décrit en considérant que la deuxième distance D2 séparant chaque deuxième portion de rail 182 et le rail de guidage 15 respectif est inférieure à la première distance D1 séparant chaque première portion de rail 181 et le rail de guidage 15 respectif.

Lors de l'entrée du film 3 dans le système d'étirage 13, les bords longitudinaux 4 du film 3 sont saisis respectivement par les premières et deuxièmes pinces 16, 17 de chaque dispositif d'étirage 14. Les premières et deuxièmes pinces 16, 17, entraînées par les premières et deuxièmes chaînes sans fin 22, 23, transportent le film 3 le long des rails de guidage 15. Dans la première zone A1 du système d'étirage 13, le film 3, ayant atteint une température adéquate d'étirage, est étiré dans le sens transversal du fait de la divergence des rails de guidage 15, et donc de l'augmentation continue de l'espacement entre les premières et deuxièmes pinces 16, 17 de l'un des dispositifs d'étirage 14 et les premières et deuxièmes pinces 16, 17 de l'autre des dispositifs d'étirage 14.

Lorsque les premiers et deuxièmes éléments de retenue 19, 21 de chaque dispositif d'étirage 14 atteignent la portion de transition 183 et la deuxième portion de rail 182 du rail de retenue 18 respectif, les galets d'appui primaires supérieur et inférieur 52, 53 portés par chaque deuxième élément d'articulation 28 et les galets d'appui secondaires supérieur et inférieur 56, 57 portés par chaque deuxième organe d'articulation 41 sont sollicités vers le rail de guidage 15 respectif par la portion de transition 183 et la deuxième portion de rail 182 du rail de retenue 18 respectif, ce qui induit un déplacement des deuxièmes éléments d'articulation 28 et des deuxièmes organes d'articulation 41 vers le rail de guidage 15 respectif. Ce déplacement des deuxièmes éléments d'articulation 28 et des deuxièmes organes d'articulation 41 a pour effet d'augmenter le pas de chacune des première et deuxième chaînes sans fin 22, 23 et d'éloigner les premières et deuxièmes pinces 16, 17 de chaque dispositif d'étirage 14. Ces dispositions permettent ainsi d'assurer un étirage longitudinal du film 3 simultanément à son étirage transversal.

Le fonctionnement du système d'étirage 13 va maintenant être décrit en considérant que la deuxième distance D2 séparant chaque deuxième portion de rail 182 et le rail de guidage 15 respectif est supérieure à la première distance D1 séparant chaque première portion de rail 181 et le rail de guidage 15 respectif.

Lorsque les premiers et deuxièmes éléments de retenue 19, 21 de chaque dispositif d'étirage 14 atteignent la portion de transition 183 et la deuxième portion de rail 182 du rail de retenue 18 respectif, les galets de retenue primaires et secondaires 35, 47 portés par les premiers et deuxièmes éléments de retenue 19, 21 sont sollicités à distance du rail de guidage 15 respectif par la portion de transition 183 et la deuxième portion de rail 182 du rail de retenue 18 respectif, ce qui induit un déplacement deuxièmes éléments d'articulation 28 et des deuxièmes organes d'articulation 41 à distance du rail de guidage 15 respectif. Ce déplacement des deuxièmes éléments d'articulation 28 et des deuxièmes organes d'articulation 41 a pour effet de diminuer le pas de chacune des première et deuxième chaînes sans fin 22, 23 et de rapprocher les premières et deuxièmes pinces 16, 17 de chaque dispositif d'étirage 14. Ces dispositions permettent ainsi d'assurer une relaxation longitudinale du film 3 simultanément à son étirage transversal.

Selon une variante de réalisation de l'invention, les rails de guidage 15 pourraient présenter, dans la deuxième zone A2 du système d'étirage 13, une portion sur laquelle les rails de guidage 15 convergent l'un vers l'autre de manière à permettre une relaxation transversale du film simultanément à sa relaxation longitudinale.

Comme il va de soi, l'invention ne se limite pas à la seule forme d'exécution de ce système d'étirage, décrite ci-dessus à titre d'exemple, elle en embrasse au contraire toutes les variantes de réalisation. C'est ainsi notamment que le dispositif d'étirage pourrait comporter des troisièmes pinces disposées chacune entre une première pince respective et une deuxième pince respective, et une troisième chaîne sans fin reliée aux troisièmes pinces et configurée pour entraîner les troisièmes pinces le long du rail de guidage. Le dispositif d'étirage pourrait également comporter plus de trois types de pinces et plus de trois chaîne sans fin.

## Revendications

1. Dispositif d'étirage (14) pour étirer un film (3) en matière synthétique, comprenant :
- un rail de guidage (15) comportant une première surface de guidage (15.1) destinée à être tournée vers le film et une deuxième surface de guidage (15.2) opposée à la première surface de guidage (15.1),
- une pluralité de premières pinces (16) et une pluralité de deuxièmes pinces (17) destinées chacune à saisir un même bord longitudinal (4) du film, les premières et deuxièmes pinces (16, 17) étant disposées alternativement le long du rail de guidage (15) et étant configurées pour être guidées par le rail de guidage (15), et
- une première chaîne sans fin (22) reliée aux premières pinces (16) et configurée pour entraîner les premières pinces (16) le long du rail de guidage (15), le dispositif d'étirage (14) comprend en outre une deuxième chaîne sans fin (23) reliée aux deuxièmes pinces (17) et configurée pour entraîner les deuxièmes pinces (17) le long du rail de guidage (15), les première et deuxième chaînes sans fin (22, 23) étant distinctes l'une de l'autre de telle sorte que les premières pinces (16) ne sont pas reliées mécaniquement à la deuxième chaîne sans fin (23) et de telle sorte que les deuxièmes pinces (17) ne sont pas reliées mécaniquement à la première chaîne sans fin (22), et en ce que les première et deuxième chaînes sans fin (22, 23) sont déformables entre un premier état dans lequel les premières et deuxièmes pinces (16, 17) sont disposées à proximité les unes des autres, et un deuxième état dans lequel les premières et deuxièmes pinces (16, 17) sont éloignées les unes des autres.

2. Dispositif d'étirage selon la revendication 1, dans lequel la première chaîne sans fin (22) et la deuxième chaîne sans fin (23) sont imbriquées l'une dans l'autre.

3. Dispositif d'étirage selon la revendication 1 ou 2, dans lequel la première chaîne sans fin (22) comporte des premiers maillons primaires (25) et des deuxièmes maillons primaires (26) disposés de manière alternée le long de la première chaîne sans fin (22) et montés articulés les uns par rapport aux autres, et des premiers éléments d'articulation (27) et des deuxièmes éléments d'articulation (28) disposés de manière alternée le long de la première chaîne sans fin (22) et autour desquels sont montés articulés les premiers et deuxièmes maillons primaires (25, 26), chaque première pince (16) étant montée sur un premier élément d'articulation (27) respectif, et dans lequel la deuxième chaîne sans fin (23) comporte des premiers maillons secondaires (37) et des deuxièmes maillons secondaires (38) disposés de manière alternée le long de la deuxième chaîne sans fin (23) et montés articulés les uns par rapport aux autres, et des premiers organes d'articulation (39) et des deuxièmes organes d'articulation (41) disposés de manière alternée le long de la deuxième chaîne sans fin (23) et autour desquels sont montés articulés les premiers et deuxièmes maillons secondaires (37, 38), chaque deuxième pince (17) étant montée sur un premier organe d'articulation (39) respectif.

4. Dispositif d'étirage selon la revendication 3, dans lequel chaque première pince (16) est située en regard d'un deuxième organe d'articulation (41) respectif, et chaque deuxième pince (17) est située en regard d'un deuxième élément d'articulation (28) respectif.

5. Dispositif d'étirage selon la revendication 3 ou 4, lequel comporte en outre :
- un rail de retenue (18) s'étendant le long du rail de guidage (15), le rail de retenue (18) comportant une surface d'appui (18.1) tournée vers le rail de guidage (15) et une surface de retenue (18.2) opposée à la surface d'appui (18.1), et
- une pluralité de premiers éléments de retenue (19) et une pluralité de deuxièmes éléments de retenue (21) disposés alternativement le long du rail de retenue (18) et configurés pour être guidés par le rail de retenue (18), chaque premier élément de retenue (19) étant monté sur un deuxième élément d'articulation (28) respectif de la première chaîne sans fin (22) et étant configuré pour être entraîné par la première chaîne sans fin (22) le long du rail de retenue (18), chaque deuxième élément de retenue (21) étant monté sur un deuxième organe d'articulation (41) respectif de la deuxième chaîne sans fin (23) et étant configuré pour être entraîné par la deuxième chaîne sans fin (23) le long du rail de retenue (18).

6. Dispositif d'étirage selon la revendication 5, dans lequel chaque première pince (16) est configurée pour venir en butée contre un deuxième élément de retenue (21) respectif lorsque les première et deuxième chaînes sans fin (22, 23) sont dans le deuxième état, et chaque deuxième pince (17) est configurée pour venir en butée contre un premier élément de retenue (19) respectif lorsque les première et deuxième chaînes sans fin (22, 23) sont dans le deuxième état.

7. Dispositif d'étirage selon la revendication 5 ou 6, dans lequel le rail de retenue (18) comporte une première portion de rail (181) qui s'étend sensiblement parallèlement au rail de guidage (15) et qui est écartée du rail de guidage (15) d'une première distance (D1), et une deuxième portion de rail (182) qui s'étend sensiblement parallèlement au rail de guidage (15) et qui est écartée du rail de guidage (15) d'une deuxième distance (D2) différente de la première distance (D1), la deuxième portion de rail (182) étant située en aval de la première portion de rail (181), et dans lequel le rail de retenue (18) est configuré de telle sorte qu'un déplacement des premiers et deuxièmes éléments de retenue (19, 21) de la première portion de rail (181) à la deuxième portion de rail (182) entraîne une déformation des première et deuxième chaînes sans fin (22, 23) entre les premier et deuxième états.

8. Dispositif d'étirage (14) selon la revendication 7, dans lequel la deuxième distance (D2) est inférieure à la première distance (D1), et le rail de retenue (18) est configuré de telle sorte qu'un déplacement des premiers et deuxièmes éléments de retenue (19, 21) de la première portion de rail (181) à la deuxième portion de rail (182) entraîne une déformation des première et deuxième chaînes sans fin (22, 23) du premier état au deuxième état de manière à induire un étirage longitudinal du film (3).

9. Dispositif d'étirage (14) selon la revendication 7, dans lequel la deuxième distance (D2) est supérieure à la première distance (D1), et le rail de retenue (18) est configuré de telle sorte qu'un déplacement des premiers et deuxièmes éléments de retenue (19, 21) de la première portion de rail (181) à la deuxième portion de rail (182) entraîne une déformation des première et deuxième chaînes sans fin (22, 23) du deuxième état au premier état de manière à induire une relaxation longitudinale du film.

10. Dispositif d'étirage (14) selon l'une quelconque des revendications 3 à 9, dans lequel les premiers et deuxièmes éléments d'articulation (27, 28) appartenant à la première chaîne sans fin (22) sont distincts et séparés mécaniquement des premiers et deuxièmes organes d'articulation (39, 41) appartenant à la deuxième chaîne sans fin (23).

11. Dispositif d'étirage (14) selon la revendication 10, dans lequel chaque premier élément d'articulation (27) est situé en regard d'un deuxième organe d'articulation (41) respectif et est espacé du deuxième organe d'articulation (41) respectif d'une distance de séparation qui varie en fonction de l'état occupé par les première et deuxième chaînes sans fin (22, 23), et chaque deuxième élément d'articulation (28) est situé en regard d'un premier organe d'articulation (39) respectif et est espacé du premier organe d'articulation (39) respectif d'une distance d'espacement qui varie en fonction de l'état occupé par les première et deuxième chaînes sans fin (22, 23).

12. Dispositif d'étirage (14) selon l'une quelconque des revendications 1 à 11, dans lequel les première et deuxième chaînes sans fin (22, 23) sont configurées de telle sorte que les premières et deuxièmes pinces (16, 17) sont en appui les unes contre les autres lorsque les première et deuxième chaîne sans fin (22, 23) sont dans le premier état.

13. Dispositif d'étirage selon l'une quelconque des revendications 1 à 12, dans lequel chaque première pince (16) comporte un premier corps de pince (29) et deux premiers patins d'appui latéraux (72) qui sont disposés de part et d'autre du premier corps de pince (29) respectif et qui sont décalés le long du rail de guidage (15), et chaque deuxième pince (17) comporte un deuxième corps de pince (42) et deux deuxièmes patins d'appui latéraux (73) qui sont disposés de part et d'autre du deuxième corps de pince (42) respectif et qui sont décalés le long du rail de guidage (15), les première et deuxième chaînes sans fin (22, 23) étant configurées de telle sorte que, lorsque les première et deuxième chaînes sans fin (22, 23) sont dans le premier état, chaque premier patin d'appui latéral (72) prend appui contre un deuxième patin d'appui latéral (73) d'une deuxième pince (17) adjacente.

14. Système d'étirage (13) pour étirer un film (3) en matière synthétique au moins dans un sens transversal, comprenant deux dispositifs d'étirage (14) selon l'une quelconque des revendications 1 à 13 configurés pour être disposés de part et d'autre du film (3), les premières et deuxièmes pinces (16, 17) de l'un des dispositifs d'étirage (14) étant agencées pour saisir un premier bord longitudinal du film (3) et les premières et deuxièmes pinces (16, 17) de l'autre des dispositifs d'étirage (14) étant agencées pour saisir un deuxième bord longitudinal du film.

## Patentansprüche

1. Ziehvorrichtung (14) zum Ziehen einer Folie (3) aus synthetischem Material, umfassend:
- eine Führungsschiene (15), die eine erste Führungsfläche (15.1), die dazu bestimmt ist, dem Film zugewandt zu sein, und eine zweite Führungsfläche (15.2) aufweist, die der ersten Führungsfläche (15.1) gegenüberliegt,
- eine Mehrzahl von ersten Greifern (16) und eine Mehrzahl von zweiten Greifern (17), die jeweils dazu bestimmt sind, eine gleiche Längskante (4) der Folie zu greifen, wobei die ersten und die zweiten Greifer (16, 17) abwechselnd entlang der Führungsschiene (15) angeordnet und dazu konfiguriert sind, durch die Führungsschiene (15) geführt zu werden, und
- eine erste Endloskette (22), die mit den ersten Greifern (16) verbunden und dazu konfiguriert ist, die ersten Greifer (16) entlang der Führungsschiene (15) anzutreiben,
wobei die Ziehvorrichtung (14) ferner eine zweite Endloskette (23) umfasst, die mit den zweiten Greifern (17) verbunden und dazu konfiguriert ist, die zweiten Greifer (17) entlang der Führungsschiene (15) anzutreiben, wobei die erste und die zweite Endloskette (22, 23) derart voneinander verschieden sind, dass die ersten Greifer (16) mechanisch nicht mit der zweiten Endloskette (23) verbunden sind und die zweiten Greifer (17) mechanisch nicht mit der ersten Endloskette (22) verbunden sind, und dass die erste und die zweite Endloskette (22, 23) zwischen einem ersten Zustand, in dem die ersten und die zweiten Greifer (16, 17) nahe beieinander angeordnet sind, und einem zweiten Zustand, in dem die ersten und die zweiten Greifer (16, 17) voneinander entfernt sind, verformbar sind.

2. Ziehvorrichtung nach Anspruch 1, wobei die erste Endloskette (22) und die zweite Endloskette (23) ineinander verschachtelt sind.

3. Ziehvorrichtung nach Anspruch 1 oder 2, wobei die erste Endloskette (22) erste Primärglieder (25) und zweite Primärglieder (26) aufweist, die abwechselnd entlang der ersten Endloskette (22) angeordnet und im Verhältnis zueinander gelenkig montiert sind, und erste Gelenkelemente (27) und zweite Gelenkelemente (28), die abwechselnd entlang der ersten Endloskette (22) angeordnet sind und um die herum die ersten und die zweiten Primärglieder (25, 26) gelenkig montiert sind, wobei jeder erste Greifer (16) jeweils an einem ersten Gelenkelement (27) montiert ist, und wobei die zweite Endloskette (23) erste Sekundärglieder (37) und zweite Sekundärglieder (38) aufweist, die abwechselnd entlang der zweiten Endloskette (23) angeordnet und im Verhältnis zueinander gelenkig montiert sind, und erste Gelenkteile (39) und zweite Gelenkteile (41), die abwechselnd entlang der zweiten Endloskette (23) angeordnet sind und um die herum die ersten und die zweiten Sekundärglieder (37, 38) gelenkig montiert sind, wobei jeder zweite Greifer (17) jeweils an einem ersten Gelenkteil (39) montiert ist.

4. Ziehvorrichtung nach Anspruch 3, wobei sich jeder erste Greifer (16) gegenüber einem jeweiligen zweiten Gelenkteil (41) befindet und sich jeder zweite Greifer (17) gegenüber einem jeweiligen zweiten Gelenkelement (28) befindet.

5. Ziehvorrichtung nach Anspruch 3 oder 4, die ferner Folgendes aufweist:
- eine Halteschiene (18), die sich entlang der Führungsschiene (15) erstreckt, wobei die Halteschiene (18) eine Auflagefläche (18.1), die der Führungsschiene (15) zugewandt ist, und eine Haltefläche (18.2) aufweist, die der Auflagefläche (18.1) gegenüberliegt, und
- eine Mehrzahl von ersten Halteelementen (19) und eine Mehrzahl von zweiten Halteelementen (21), die abwechselnd entlang der Halteschiene (18) angeordnet und dazu konfiguriert sind, durch die Halteschiene (18) geführt zu werden, wobei jedes erste Halteelement (19) an einem jeweiligen zweiten Gelenkelement (28) der ersten Endloskette (22) montiert und dazu konfiguriert ist, durch die erste Endloskette (22) entlang der Halteschiene (18) angetrieben zu werden, wobei jedes zweite Halteelement (21) an einem jeweiligen zweiten Gelenkteil (41) der zweiten Endloskette (23) montiert und dazu konfiguriert ist, durch die zweite Endloskette (23) entlang der Halteschiene (18) angetrieben zu werden.

6. Ziehvorrichtung nach Anspruch 5, wobei jeder erste Greifer (16) dazu konfiguriert ist, an einem jeweiligen zweiten Halteelement (21) anzustoßen, wenn sich die erste und die zweite Endloskette (22, 23) im zweiten Zustand befinden, und jeder zweite Greifer (17) dazu konfiguriert ist, an einem jeweiligen ersten Halteelement (19) anzustoßen, wenn sich die erste und die zweite Endloskette (22, 23) im zweiten Zustand befinden.

7. Ziehvorrichtung nach Anspruch 5 oder 6, wobei die Halteschiene (18) einen ersten Schienenabschnitt (181), der sich im Wesentlichen parallel zur Führungsschiene (15) erstreckt und der von der Schienenführung (15) um einen ersten Abstand (D1) beabstandet ist, und einen zweiten Schienenabschnitt (182) aufweist, der sich im Wesentlichen parallel zur Führungsschiene (15) erstreckt und der von der Führungsschiene (15) um einen zweiten Abstand (D2), der sich vom ersten Abstand (D1) unterscheidet, beabstandet ist, wobei der zweite Schienenabschnitt (182) sich stromabwärts des ersten Schienenabschnitts (181) befindet, und wobei die Halteschiene (18) derart konfiguriert ist, dass eine Bewegung des ersten und des zweiten Halteelement (19, 21) vom ersten Schienenabschnitt (181) zum zweiten Schienenabschnitt (182) eine Verformung der ersten und der zweiten Endloskette (22, 23) zwischen dem ersten und dem zweiten Zustand bewirkt.

8. Ziehvorrichtung (14) nach Anspruch 7, wobei der zweite Abstand (D2) geringer ist als der erste Abstand (D1), und die Halteschiene (18) derart konfiguriert ist, dass eine Bewegung des ersten und des zweiten Halteelements (19, 21) vom ersten Schienenabschnitt (181) zum zweiten Schienenabschnitt (182) eine Verformung der ersten und der zweiten Endloskette (22, 23) vom ersten Zustand in den zweiten Zustand auf eine Weise bewirkt, dass ein Längsziehen der Folie (3) induziert wird.

9. Ziehvorrichtung (14) nach Anspruch 7, wobei der zweite Abstand (D2) größer ist als der erste Abstand (D1), und die Halteschiene (18) derart konfiguriert ist, dass eine Bewegung des ersten und des zweiten Halteelements (19, 21) vom ersten Schienenabschnitt (181) zum zweiten Schienenabschnitt (182) eine Verformung der ersten und der zweiten Endloskette (22, 23) vom zweiten Zustand in den ersten Zustand auf eine Weise bewirkt, dass eine Längsrelaxation der Folie induziert wird.

10. Ziehvorrichtung (14) nach einem der Ansprüche 3 bis 9, wobei das erste und das zweite Gelenkelement (27, 28), die zur ersten Endloskette (22) gehören, verschieden und mechanisch von dem ersten und dem zweiten Gelenkteil (39, 41) getrennt sind, die zur zweiten Endloskette (23) gehören.

11. Ziehvorrichtung (14) nach Anspruch 10, wobei jedes erste Gelenkelement (27) sich gegenüber einem jeweiligen zweiten Gelenkteil (41) befindet und von dem jeweiligen zweiten Gelenkteil (41) um einen Trennungsabstand beabstandet ist, der je nach dem von der ersten und der zweiten Endloskette (22, 23) eingenommenen Zustand variiert, und jedes zweite Gelenkelement (28) sich gegenüber einem jeweiligen ersten Gelenkteil (39) befindet und von dem jeweiligen ersten Gelenkteil (39) um einen Beabstandungsabstand beabstandet ist, der je nach dem von der ersten und der zweiten Endloskette (22, 23) eingenommenen Zustand variiert.

12. Ziehvorrichtung (14) nach einem der Ansprüche 1 bis 11, wobei die ersten und die zweite Endloskette (22, 23) derart konfiguriert sind, dass die ersten und die zweiten Greifer (16, 17) aneinander anstoßen, wenn die erste und die zweite Endloskette (22, 23) sich im ersten Zustand befinden.

13. Ziehvorrichtung nach einem der Ansprüche 1 bis 12, wobei jeder erste Greifer (16) einen ersten Greiferkörper (29) und zwei erste seitliche Stützpolster (72) aufweist, die auf jeder Seite des jeweiligen ersten Greiferkörpers (29) angeordnet sind und die entlang der Führungsschiene (15) versetzt sind, und jeder zweite Greifer (17) einen zweiten Greiferkörper (42) und zwei zweite seitliche Stützpolster (73) aufweist, die auf jeder Seite des jeweiligen zweiten Greiferkörpers (42) angeordnet sind und die entlang der Führungsschiene (15) versetzt sind, wobei die erste und die zweite Endloskette (22, 23) derart konfiguriert sind, dass, wenn die erste und die zweite Endloskette (22, 23) sich im ersten Zustand befinden, jedes erste seitliche Stützpolster (72) an einem zweiten seitlichen Stützpolster (73) eines benachbarten zweiten Greifers (17) anstößt.

14. Ziehsystem (13) zum Ziehen einer Folie (3) aus synthetischem Material mindestens in eine Querrichtung, umfassend zwei Ziehvorrichtungen (14) nach einem der Ansprüche 1 bis 13, die dazu konfiguriert sind, auf jeder Seite der Folie (3) angeordnet zu sein, wobei die ersten und die zweiten Greifer (16, 17) einer der Ziehvorrichtungen (14) angeordnet sind, um eine erste Längskante der Folie (3) zu greifen, und die ersten und die zweiten Greifer (16, 17) der anderen Ziehvorrichtungen (14) angeordnet sind, um eine zweite Längskante der Folie zu greifen.

## Claims

1. A stretching device (14) for stretching a film (3) made of a synthetic material, comprising:
- a guide rail (15) including a first guide surface (15.1) intended to be directed towards the film and a second guide surface (15.2) opposite to the first guide surface (15.1),
- a plurality of first clamps (16) and a plurality of second clamps (17) each intended to grasp the same longitudinal edge (4) of the film, the first and second clamps (16, 17) being disposed alternately along the guide rail (15) and being configured to be guided by the guide rail (15), and
- a first endless chain (22) connected to the first clamps (16) and configured to drive the first clamps (16) along the guide rail (15),
the stretching device (14) further comprises a second endless chain (23) connected to the second clamps (17) and configured to drive the second clamps (17) along the guide rail (15), the first and second endless chains (22, 23) being distinct from each other such that the first clamps are not mechanically connected to the second endless chain and such that the second clamps are not mechanically connected to the first endless chain, and in that the first and second endless chains (22, 23) are deformable between a first state in which the first and second clamps (16, 17) are disposed proximate to one another, and a second state in which the first and second clamps (16, 17) are away from one another.

2. The stretching device according to claim 1, wherein the first endless chain (22) and the second endless chain (23) are nested within one another.

3. The stretching device according to claim 1 or 2, wherein the first endless chain (22) includes first primary links (25) and second primary links (26) disposed alternately along the first endless chain (22) and hingedly mounted relative to one another, and first articulation elements (27) and second articulation elements (28) disposed alternately along the first endless chain (22) and about which the first and second primary links (25, 26) are hingedly mounted, each first clamp (16) being mounted on a respective first articulation element (27), and wherein the second endless chain (23) includes first secondary links (37) and second secondary links (38) disposed alternately along the second endless chain (23) and hingedly mounted relative to one another, and first articulation members (39) and second articulation members (41) disposed alternately along the second endless chain (23) and about which the first and second secondary links (37, 38) are hingedly mounted, each second clamp (17) being mounted on a respective first articulation member (39).

4. The stretching device according to claim 3, wherein each first clamp (16) is located opposite a respective second articulation member (41), and each second clamp (17) is located opposite a respective second articulation element (28).

5. The stretching device according to claim 3 or 4, which further includes:
- a retaining rail (18) extending along the guide rail (15), the retaining rail (18) including a bearing surface (18.1) directed towards the guide rail (15) and a retaining surface (18.2) opposite to the bearing surface (18.1), and
- a plurality of first retaining elements (19) and a plurality of second retaining elements (21) disposed alternately along the retaining rail (18) and configured to be guided by the retaining rail (18), each first retaining element (19) being mounted on a respective second articulation element (28) of the first endless chain (22) and being configured to be driven by the first endless chain (22) along the retaining rail (18), each second retaining element (21) being mounted on a respective second articulation member (41) of the second endless chain (23) and being configured to be driven by the second endless chain (23) along the retaining rail (18).

6. The stretching device according to claim 5, wherein each first clamp (16) is configured to abut against a respective second retaining element (21) when the first and second endless chains (22, 23) are in the second state, and each second clamp (17) is configured to abut against a respective first retaining element (19) when the first and second endless chains (22, 23) are in the second state.

7. The stretching device according to claim 5 or 6, wherein the retaining rail (18) includes a first rail portion (181) which extends substantially parallel to the guide rail (15) and which is spaced apart from the guide rail (15) by a first distance (D1), and a second rail portion (182) which extends substantially parallel to the guide rail (15) and which is spaced apart from the guide rail (15) by a second distance (D2) which is different from the first distance (D1), the second rail portion (182) being located downstream of the first rail portion (181), and wherein the retaining rail (18) is configured such that a displacement of the first and second retaining elements (19, 21) from the first rail portion (181) to the second rail portion (182) causes a deformation of the first and second endless chains (22, 23) between the first and second states.

8. The stretching device (14) according to claim 7, wherein the second distance (D2) is smaller than the first distance (D1), and the retaining rail (18) is configured such that a displacement of the first and second retaining elements (19, 21) from the first rail portion (181) to the second rail portion (182) causes a deformation of the first and second endless chains (22, 23) from the first state to the second state so as to impart a longitudinal stretching of the film (3).

9. The stretching device (14) according to claim 7, wherein the second distance (D2) is larger than the first distance (D1), and the retaining rail (18) is configured such that a displacement of the first and second retaining elements (19, 21) from the first rail portion (181) to the second rail portion (182) causes a deformation of the first and second endless chains (22, 23) from the second state to the first state so as to impart a longitudinal relaxation of the film.

10. The stretching device (14) according to any one of claims 3 to 9, wherein the first and second articulation elements (27, 28) belonging to the first endless chain (22) are distinct and mechanically separate from the first and second articulation members (39, 41) belonging to the second endless chain (23).

11. The stretching device (14) according to claim 10, wherein each first articulation element (27) is located opposite a respective second articulation member (41) and is spaced apart from the respective second articulation member (41) by a separation distance which varies depending on the state occupied by the first and second endless chains (22, 23), and each second articulation element (28) is located opposite a respective first articulation member (39) and is spaced apart from the respective first articulation member (39) by a spacing distance which varies depending on the state occupied by the first and second endless chains (22, 23).

12. The stretching device (14) according to any one of claims 1 to 11, wherein the first and second endless chains (22, 23) are configured such that the first and second clamps (16, 17) bear against one another when the first and second endless chains (22, 23) are in the first state.

13. The stretching device according to any one of claims 1 to 12, wherein each first clamp (16) includes a first clamp body (29) and two first lateral support pads (72) which are disposed on either side of the respective first clamp body (29) and which are shifted along the guide rail (15), and each second clamp (17) includes a second clamp body (42) and two second lateral support pads (73) which are disposed on either side of the respective second clamp body (42) and which are shifted along the guide rail (15), the first and second endless chains (22, 23) being configured such that, when the first and second endless chains (22, 23) are in the first state, each first lateral support pad (72) bears against a second lateral support pad (73) of an adjacent second clamp (17).

14. A stretching system (13) for stretching a film (3) made of a synthetic material at least in a transverse direction, comprising two stretching devices (14) according to any one of claims 1 to 13 configured to be disposed on either side of the film (3), the first and second clamps (16, 17) of one of the stretching devices (14) being arranged so as to grasp a first longitudinal edge of the film (3) and the first and second clamps (16, 17) of the other one amongst the stretching devices (14) being arranged so as to grasp a second longitudinal edge of the film.
